(19) Europäisches Patentamt / European Patent Office / Office européen des brevets

(11) **EP 3 526 353 B1**

(12) **EUROPEAN PATENT SPECIFICATION**

(45) Date of publication and mention of the grant of the patent:
**31.08.2022  Bulletin 2022/35**

(21) Application number: **17825974.3**

(22) Date of filing: **03.10.2017**

(51) International Patent Classification (IPC):
**C22B 1/00** $^{(2006.01)}$    **C22B 7/00** $^{(2006.01)}$
**C22B 59/00** $^{(2006.01)}$

(52) Cooperative Patent Classification (CPC):
**C22B 59/00; C22B 1/00; C22B 7/00;** Y02P 10/20

(86) International application number:
**PCT/IT2017/000213**

(87) International publication number:
**WO 2018/069945 (19.04.2018 Gazette 2018/16)**

(54) **PROCESS FOR THE PREPARATION OF A CONCENTRATE OF METALS, RARE METALS AND RARE EARTH METALS FROM RESIDUES OF ALUMINA PRODUCTION BY BAYER PROCESS OR FROM MATERIALS WITH A CHEMICAL COMPOSITION SIMILAR TO SAID RESIDUES, AND REFINEMENT OF THE CONCENTRATE SO OBTAINED**

VERFAHREN ZUR HERSTELLUNG EINES KONZENTRATS AUS METALLEN, SELTENEN METALLEN UND SELTENERDMETALLEN AUS RÜCKSTÄNDEN DER ALUMINIUMOXIDPRODUKTION MITTELS BAYER-VERFAHREN ODER AUS MATERIALIEN MIT EINER CHEMISCHEN ZUSAMMENSETZUNG ÄHNLICH DIESER RÜCKSTÄNDE SOWIE RAFFINIERUNG DES GEWONNENEN KONZENTRATS

PROCÉDÉ DE PRÉPARATION D'UN CONCENTRÉ DE MÉTAUX, DE MÉTAUX RARES ET DE MÉTAUX DE TERRES RARES À PARTIR DE RÉSIDUS DE PRODUCTION D'ALUMINE PAR PROCÉDÉ BAYER OU À PARTIR DE MATÉRIAUX AYANT UNE COMPOSITION CHIMIQUE SIMILAIRE À CELLE DESDITS RÉSIDUS, ET AFFINAGE DU CONCENTRÉ AINSI OBTENU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.10.2016  IT 201600101809**

(43) Date of publication of application:
**21.08.2019  Bulletin 2019/34**

(73) Proprietor: **Ecotec Gestione Impianti S.r.l.**
**96100 Siracusa (IT)**

(72) Inventor: **IMERITO, Aldo**
**96100 Siracusa (IT)**

(74) Representative: **Santi, Filippo et al**
**Barzanò & Zanardo Roma S.p.A.**
**Via Piemonte 26**
**00187 Roma (IT)**

(56) References cited:
US-A- 5 030 424

• ERCAG E ET AL: "FURNACE SMELTING AND EXTRACTIVE METALLURGY OF RED MUD: RECOVERY OF TIO2, A12O3 AND PIG IRON", JOURNAL OF CHEMICAL TECHNOLOGY AND BIOTECHNOLOGY, WILEY, vol. 70, no. 3, 1 November 1997 (1997-11-01), pages 241-246, XP000750791, ISSN: 0268-2575
• CHENNA RAO BORRA ET AL: "Smelting of Bauxite Residue (Red Mud) in View of Iron and Selective Rare Earths Recovery", JOURNAL OF SUSTAINABLE METALLURGY, vol. 2, no. 1, 1 March 2016 (2016-03-01), pages 28-37, XP055376249, ISSN: 2199-3823, DOI: 10.1007/s40831-015-0026-4

• YANJU LIU ET AL: "Hidden values in bauxite residue (red mud): Recovery of metals", WASTE MANAGEMENT., vol. 34, no. 12, 1 December 2014 (2014-12-01), pages 2662-2673, XP055376211, US ISSN: 0956-053X, DOI: 10.1016/j.wasman.2014.09.003

**Description**

This invention relates to the technical field of the recovery of metals, rare metals and rare earth metals from residues produced during the production of alumina by the Bayer process (known as "red mud").

More specifically, the invention relates to the extraction of scandium, yttrium, lanthanum, aluminium, iron, titanium, gallium and any other metals, rare metals and rare earth metals present in the so-called red mud, which is a side-product obtained during the Bayer process for the extraction of alumina from bauxite.

The process, in its entirety, according to the invention results in the formation of a concentrate containing the elements of interest and the subsequent selective separation of compounds containing the elements of interest. The entire process is conceived in such a way as to transform a waste to be disposed of in landfill into a series of products which can be reused in the Bayer process or which can be re-inserted in the reference markets, without producing further waste, thus following the principles of zero waste and circular economy. The invention therefore has a strong economic and ecological importance.

As is known, the industrial process most commonly used to obtain alumina from bauxite is called Bayer process. The main steps which characterize the process are:

- grinding of the bauxite;
- digestion of the bauxite in a 10% aqueous solution of NaOH. The hot solubilization of the alumina present in the bauxite occurs during this step. The temperatures during this step can range from approximately 150°C (solubilization of trihydrate alumina) to 250°C with a high reaction pressure (for the solubilization monohydrate alumina);
- separation of the insolubles (red mud) by decantation and filtration;
- precipitation of $Al(OH)_3$ by lowering the temperature;
- calcination of $Al(OH)_3$, to obtain anhydrous alumina, $Al_2O_3$.

Although the exact composition of the bauxites used for the production of alumina with the Bayer process can differ according to the mine of origin, they all contain oxides of Al, Ti, Fe and Si in various compositions and percentages; moreover, there are traces of other elements such as zinc, vanadium and some rare metals and rare earth metals. The extraction efficiency of the Bayer process is very low and this results in the presence of large quantities of metallic elements in the processing waste, generally called "red mud".

Table 1 indicates a typical composition of a red mud produced by the Bayer process.

**Table 1** - main components of red mud

| Parameter | Unit of measurement | Values |
|-----------|---------------------|--------|
| $Al_2O_3$ | % | 16-18 |
| $Fe_2O_3$ | % | 51-57 |
| $TiO_2$ | % | 3-5 |
| $SiO_2$ | % | 8-12 |
| $Na_2O$ | % | 4-6 |
| CaO | % | 0.03-2.30 |
| $V_2O_5$ | % | 0.14-0.21 |
| MgO | % | 0.13-0.18 |
| MnO | % | 0.157-0.250 |
| LOI at 1000°C | % | 11-13 |

Table 2 shows the trace elements and the rare earths present in a NALCO red mud.

**Table 2** - trace elements and rare earths in red mud

| Parameter | Unit of measurement | Values |
|-----------|---------------------|--------|
| Sc | mg/kg | 69.97 |
| V | mg/kg | 746.35 |

(continued)

| Parameter | Unit of measurement | Values |
|---|---|---|
| Cr | mg/kg | 846.38 |
| Co | mg/kg | 22.14 |
| Ni | mg/kg | 45.91 |
| Cu | mg/kg | 103.86 |
| Zn | mg/kg | 86.57 |
| Ga | mg/kg | 93.17 |
| Rb | mg/kg | 5.99 |
| Sr | mg/kg | 47.66 |
| Y | mg/kg | 9.94 |
| Zr | mg/kg | 234.13 |
| Nb | mg/kg | 40.07 |
| Cs | mg/kg | 0.25 |
| Ba | mg/kg | 90.77 |
| Hf | mg/kg | 8.28 |
| La | mg/kg | 42.06 |
| Ce | mg/kg | 95.96 |
| Pr | mg/kg | 7.16 |
| Nd | mg/kg | 18.65 |
| Sm | mg/kg | 3.36 |
| Eu | mg/kg | 0.83 |
| Gd | mg/kg | 3.48 |
| Tb | mg/kg | 0.33 |
| Dy | mg/kg | 2.10 |
| Ho | mg/kg | 0.29 |
| Er | mg/kg | 0.82 |
| Tm | mg/kg | 0.13 |
| Yb | mg/kg | 0.99 |
| Lu | mg/kg | 0.14 |

In addition to the above-mentioned characteristics, red muds, if they are not neutralized, have an extremely basic pH (approx. pH 12.5).

The red muds are diluted, so that they can be more easily pumped, and are sent to a pressure filter, where some components are recovered; then, in the form of sludge, they are pumped away from the plant to be disposed of in disposal basins, similar to artificial lagoons. This practice has a significant environmental impact since these wastes are not disposed of efficiently and an industrial application has still not been found which is able to absorb the considerable quantity of material produced each year.

Red muds therefore potentially have extremely significant impacts, the management of which still currently constitutes a serious problem. Even though the red muds are currently managed in such a way as to minimize the impacts, they still represent an enormous hazard for human health; moreover, some sites still feel the effects of an incorrect management in the past. The surface deposits where the red muds are stored must be constructed and managed with particular care to avoid contamination of the ground water and the surrounding soils and to prevent dusty material from being dispersed into the air, thus causing harmful effects for the health; in fact, these dusts are of an extremely alkaline nature and cause irritation of the skin, eyes and the respiratory system.

Numerous studies and trials have been promoted over recent years to identify an adequate treatment of these wastes. In some cases, the high content of aluminium in the material has led to the modification of the production cycle in order to reduce the alkaline load, so as to obtain an inert mud which can be used to cover mines that are no longer used as a sub-stratum for planting the original vegetation or for other agricultural purposes or as backfill material for coastal areas. Lastly, the use of red muds has also been tested in the production of construction materials.

On the other hand, the bauxite in the Bayer process contains, as well as the main elements indicated above, also compounds containing rare metals and rare earth metals, which can be potentially exploited but the concentration of which is too low to promote an economically sustainable extraction process.

The type and concentration of the rare metals and rare earth metals present varies according to the type of bauxite used; however, amongst those with the highest concentration there is, for example, gallium and scandium. Due to the effect of the extraction of the alumina during the Bayer process, these rare metals and rare earth metals are also concentrated in the red muds produced, with the result of reaching concentration values which, even though they are still very low, are sufficient to encourage an extraction process. The typical composition data of a red mud is shown in Tables 1 and 2 above. More specifically, even only the exploitation of the scandium and gallium present could, hypothetically, economically support an extraction process, however their concentration in the red mud, as that of the other metals, rare metals and rare earth metals rare present is not yet optimum for rendering their extraction economically sustainable. It is therefore necessary to determine enrichment processes which create "concentrates" of the elements of interest, in order to overcome this qualitative deficit.

Ercag E. et al "Furnace smelting and extractive metallurgy of red mud: recovery of TiO2, Al2O3 and pig iron", Journal of Chemical Technology and Biotechnology, Wiley, vol. 70, no. 3, 1 November 1997 (1997-11-01), pages 241-246, XP000750791, ISSN: 0268-2575 discloses a process for extracting rare earths from red mud containing smelting a mixture of red mud, limestone and coke producing pig iron and a slag phase containing rare earths. The separated slag is leached to recover titania and alumina producing a rare earths concentrate.

Chenna Rao Borra et al. "Smelting of Bauxite Residue (Red Mud) in View of Iron and Selective Rare Earths Recovery", Journal of Sustainable Technology, vol. 2, no. 1, 1 March 2016 (2016-03-01), pages 28-37, XP055376249, ISSN: 2199-3823, DOI: 10.1007/s40831-015-0026-4 discloses a process of extracting rare earths and iron from red mud containing smelting a mixture of red mud, slag formers and carbon producing pig iron and a slag phase containing rare earths. The separated slag is leached obtaining a rare earth concentrate. Al and Ti can also be recovered from the leaching solution.

Summing up, even though possible alternative paths have been studied for the management of red muds, they are still considered to be wastes with a high environmental impact, the treatment and/or disposal of which represents an enormous cost for society. In addition, the depletion of the available landfill sites constitutes a problem for the continuation of industrial activities: due to the so-called "NIMBY" (Not In My Back Yard) effect, not only in Europe and in the USA, but also in many of the emerging economic powers, the disposal in landfills is seen as the last option, after having implemented the so-called 3 R (Reduce, Reuse, Recycle) principle. Consequently, concessions for new landfill sites are increasingly difficult to obtain.

Therefore, in the specific sector, there is the need to manage red muds with a more advantageous process in both economic and ecological terms.

The need is satisfied by the process according to this invention, which also achieves further advantages which are apparent in the description which follows. The invention is defined in the appended set of claims.

The process, as a whole, allows the elements of interest present in the red muds to be concentrated in smaller fractions, having a chemical composition and physical state such as to render technologically easy their further separation and refinement. The final products produced can be sent to the start of the Bayer process or sold on the reference markets.

This invention therefore relates specifically to a process in which the metals, rare metals and rare earth metals present in the powdery by-products coming from the processing of the bauxite (red muds) are concentrated, through a multistage process, until reaching values such as to allow an extraction and separation which is industrially efficient. The invention also relates to the process for separating the elements of interest, through a multistage process, transforming them into single products to be re-used in the Bayer process and/or sending them to the respective reference markets.

The process is divided into the following passages.

First concentrating step, by separating occurring iron:

- optional grinding and drying of the material to be treated material at a temperature from 60 to 250°C;
- optional roasting, in order to also eliminate the crystallization water;

- optional grinding of the product dried or subjected to roasting;
- mixing with components which are able to modify the basicity index of the mixture, by the addition of $SiO_2$, $MgO_2$, CaO or silica sand. The basicity index is a fundamental parameter for determining the behaviour of a mineral matrix, or the like, during the melting processes. In its quaternary form, the basicity index can be expressed with the following formula:

$$IB_4 = \frac{(\%CaO) + (\%MgO)}{(\%SiO_2) + (\%Al_2O_3)}$$

The basicity index, in the conditions of the melting process in question, can vary from 0.1 a 2.0, according to the type of red mud to be treated.

With the variation in the content of calcium, magnesium, silicon and aluminium oxides, there can be variations, for example, in the melting temperature, the modes of separation of some phases during the melting process, and their chemical composition.

In this invention, unlike the prior art processes on red muds, the addition of the components necessary to modify the basicity index of the mixture is achieved by adding in suitable proportions a waste coming from other processes, known as "fly ash".

In a preferred application, these fly ashes come from the combustion of coal (Coal Fly Ash) and have the further advantages of containing, in turn, rare metals and rare earth metals.

The following table summarises the typical values for the main components in a coal fly ash:

*Table 3* - Range of composition, shown in the literature, of the main components present in coal fly ash. It should be noted that the elements are expressed as oxides, due to the analytical technique used (XRF spectrometry)

| Parameter | Unit of measurement | Values |
|---|---|---|
| $SiO_2$ | % | 30 - 55 |
| $Al_2O_3$ | % | 4 - 27 |
| $Fe_2O_3$ | % | 4.5 - 9 |
| MgO | % | 1.2 - 6 |
| CaO | % | 1.2 - 30 |
| $Na_2O$ | % | 0.1 - 1.5 |
| $K_2O$ | % | 0.19 - 3.5 |
| $TiO_2$ | % | 0.6 - 2.2 |
| $P_2O_5$ | % | 0.1 - 1.0 |
| MnO | % | 0.06 - 0.3 |
| $Cr_2O_3$ | % | 0.01 - 0.04 |
| Total C | % | 0.14 - 25.5 |
| Total S | % | 0.17 - 2.8 |

- mixing with components which are able to add a potential reducing agent, by means of the presence of carbon; if Coal Fly Ash is used, this contains a significant percentage of carbon, so it also contributes towards providing the opportune reducing agent;
- melting of the material, if necessary pre-treated as indicated above, by means of any of the prior art techniques, in a suitable reactor, for example a rotary furnace, which is able to guarantee an operating temperature of the melting bath equal to or greater than 1300°C. In a preferred embodiment the reactor can be of the type EAF (Electric Arc Furnace), of the type plasma transferred arc, plasma not transferred arc, microwave plasma, Brown's gas reactor and electrolysis catalysed gas reactor;
- production of a product enriched in aluminium, titanium and other metals, rare metals and rare earth metals (slag);
- simultaneous separation of the iron, with production of a molten metallic product of poor quality equivalent to pig iron.

At the end of the first concentrating step the rare metals and rare earth metals present are drawn into the fraction operatively indicates as "slag", which is subjected to the subsequent operations. The metallic iron produced, which is of poor quality, equivalent to a pig iron, may be directed to the reference markets.

Second concentrating step (alternative A), by separating compounds containing aluminium and silicon:

- the slag exiting from the melting in the first concentrating step is sent directly to a subsequent reactor in which an alkaline salt or alkaline earth metal of a carbonate is added. The slag must remain in the liquid state until the reaction with the carbonate, so its initial temperature will be approximately 1500°C; after the mixing with the carbonate, the temperature is lowered to 1000°C and, continuing with a controlled cooling, is lowered to temperatures of less than 500°C. The aim of these actions is to obtain a poorly aggregated matrix, in the form of powder, exploiting the phenomenon of the so-called self-disintegration. A matrix with these characteristics makes the subsequent treatment step more efficient, that is to say, leaching in basic range, which dissolves the aluminium, in the form of hydrated salt of an alkaline or alkaline earth metal, together with some other compounds. At the end of the leaching operations the solid has undergone a further concentration of rare metals and rare earth metals, and, if necessary, passes to the second concentrating step, alternative B.

The liquid obtained during the basic leaching contains mainly aluminium in the form of hydrated salt of an alkaline or alkaline earth metal, but it also contains hydrated silica; this liquid is firstly treated with milk of lime, to eliminate the silica; subsequently, the liquid is treated with $CO_2$. The buffering effect of the carbon dioxide brings the pH to a value such as to precipitate $Al(OH)_3$. The solid obtained in this way is separated and calcined, producing $Al_2O_3$. The separated liquid returns to the start of the alkaline leaching section, whilst the separated hydrated silica is characterized in order to direct it to the correct recovery.

Second concentrating step (alternative B), by separating compounds containing aluminium and silicon:

- the slag exiting from the melting in the first concentrating step is cooled to a temperature below 100°C. The material is then finely ground, to maximize the specific surface area. The particles must preferably have an average size of less than 0.2 mm.
- The ground material passes to the subsequent leaching in acid; the acid used is a diluted nitric acid solution, the concentration of which must be at least 0.3 N, preferably 0.6 N.

The ratio (weight/volume) between the solid to be treated and the acid solution is between 1/2 and 1/50.
The temperature of the system during the leaching is between 40°C and 95°C at atmospheric pressure. The duration of the leaching reaction time can range from 15 minutes to 120 minutes.
The solid separated at the end of the leaching reaction time can, if necessary, be subjected to a new leaching step, similar to the previous one.
In the reaction conditions, the solution extracts the rare metals and the rare earth metals present (plus the aluminium, the titanium and the other elements present in smaller concentrations), whilst the majority of the iron present in the slag remains in the insolubilized residue; the latter is separated from the acid leaching liquid, by known means, such as, for example, decantation and filtration, and may be treated for the extraction of aluminium and silicon compounds, according to the methods described in the case of alternative A of the second concentrating step.
The liquid resulting from the acid leaching is sent, after filtration, to the next third concentrating step.

Third concentrating step, by separating compounds containing aluminium:

The liquid coming from the acid leaching, and which contains, in solution, rare metals and rare earth metals, as well as a not insignificant quantity of other elements, is treated on selective ion exchange resins, of cationic type.
The resins "capture" the rare metals and the rare earth metals present in the alkaline solution (such as, for example, scandium, yttrium and lanthanum), and block them on the active sites of the resin, thereby concentrating them. Together with the cations of the metals and rare metals, other cations of any undesired elements present are also captured, if present.
The separation of the undesired elements is achieved by processing the resins with an extracting solution of $HNO_3$ with a concentration of between 1.25 N and 1.75 N; in fact, with this concentration, only iron, aluminium, calcium, titanium and sodium are selectively brought into solution, whilst the rare metals and rare earth metals of interest remain blocked on the resins.

Subsequently, by treating the resins with $HNO_3$ with a concentration of between 3 N and 10 N, the rare metals and rare earth metals of interest are extracted and concentrated in acid solution, simultaneously regenerating the resins and making them available for a subsequent concentration cycle on resins.

The acid solution contains an enriched mixture of rare metals and rare earth meals, which can be selectively separated, according to one of the prior art techniques. By way of example, but without limiting the scope of the invention, the extraction can be carried out with organic solvents such as DEHPA (di-(2-ethylhexyl) phosphoric acid).

Concentrates of rare metals and rare earth metals are obtained with the process described above.

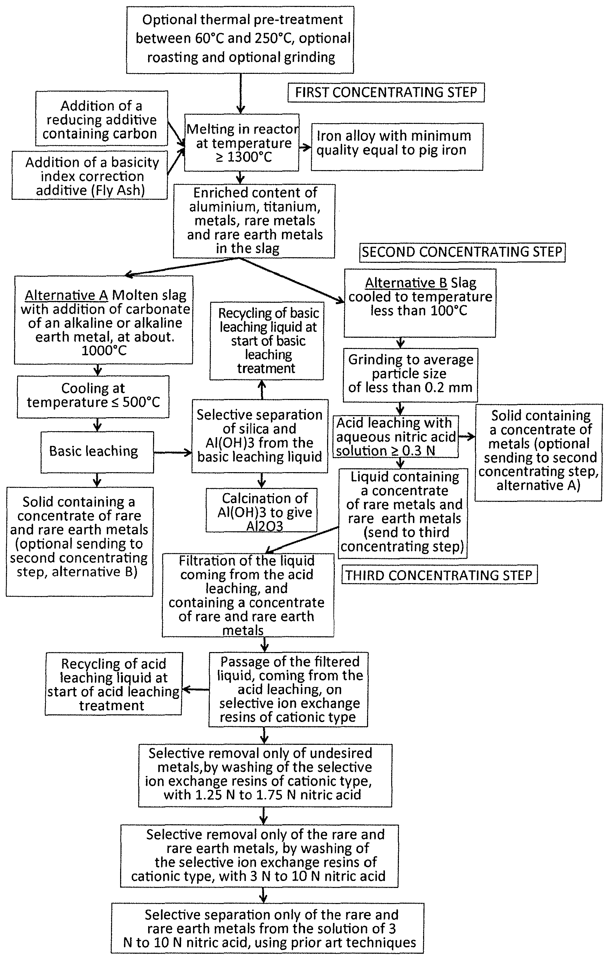

The sole figure appended shows the simplified block diagram of the invention, in terms of its most extensive definition.

The description of the invention given above is of a general nature. A more detailed description of a relative embodiment will now be given, with the help of the example, aimed at achieving a better understanding of the objects, features and advantages of the invention.

**Example**

The example illustrate an application of the process according to the invention.

A sample of red mud is dried to 250 °C and then ground. The following table shows the elementary analysis of the main elements of interest present on the sample of pre-treated red mud thus obtained, used in this example.

**Table 4** - Initial elementary analysis of the red mud used

| Parameter | Unit of measurement | Values |
|---|---|---|
| Aluminium | mg/kg | 94,982.0 |
| Iron | mg/kg | 165,967.0 |
| Yttrium | mg/kg | 52.0 |
| Lanthanum | mg/kg | 83.0 |
| Scandium | mg/kg | 40.0 |

First concentrating step:

during this step the aim is to drastically reduce, selectively, the iron content present in the matrix, both to obtain a concentration effect of the elements of interest, and because the iron is an important interfering element for the processes used in the subsequent concentration and separation steps.

A basicity index corrector, containing silica and calcium oxide, is added to the sample of red mud, suitably pre-treated. In this test, the basicity corrector is added in order to obtain a binary basicity index value $IB_2$ of approximately 0.6.

Moreover, an appropriate quantity of carbon is added, to give a suitable reducing potential to the load. A quantity of carbon equal to 11% of the weight of the sample of red mud is added in this test.

It should be noted that the quantity of the reducing agent and the basicity index corrector added is determined, each time, on the basis of the red muds used.

The mixture formed by the pre-treated red mud, the basicity index corrector and the carbon is loaded in a plasma transferred arc reactor, in which the plasmogenic gas is nitrogen. The system must be maintained in the reaction conditions, that is, at a temperature greater than 1300°C, until completion of the reduction reactions. In the case of the reactor used, this phenomenon occurred in approximately 60 minutes, but this time may vary on the basis of the type of technology used to reach the reaction conditions, the type of load (depending, for example, on the content of iron oxides and interfering elements present), the geometry of the reactor etc..

The slag and the pig iron produced are collected separately at the end of the reaction time. The slag, compared with the calcined red mud, is 55% by weight; this means that the rare metals and the rare earth metals of interest, in the slag, should have a concentration of approximately double, with respect to the pre-treated red mud. The following table shows the elementary analysis of the main elements of interest present on the sample of slag produced:

**Table 5** - Elementary analysis of the slag obtained after the first concentrating step

| Parameter | Unit of measurement | Values |
|---|---|---|
| Aluminium | mg/kg | 122,555.0 |
| Iron | mg/kg | 24,877.0 |

(continued)

| Parameter | Unit of measurement | Values |
|---|---|---|
| Yttrium | mg/kg | 102.0 |
| Lanthanum | mg/kg | 150.0 |
| Scandium | mg/kg | 80.0 |

As may be seen from the data shown in **Table 4** and **Table 5** the concentration di Yttrium, Lanthanum and Scandium has almost doubled compared with the sample of pre-treated red mud. As expected, the content of iron in the slag has considerably reduced, compared with the pre-treated red mud, falling from approximately 16.5% to approximately 2.5%. The iron removed has resulted in a ferrous-based metallic phase (iron content > 92%), which is similar to pig iron in terms of quality. The content of aluminium before and after the treatment has a less regular trend, because the compounds containing this element also undergo reactions with the development of volatile compounds (flow managed separately and not included in the invention), so the concentration factor of this element in the slag is approximately 30%.

Second concentrating step (alternative B), by separating compounds containing aluminium and silicon:

- the slag exiting from the melting in the first concentrating step is cooled to a temperature below 100°C. Fine grinding of the material is then carried out to obtain an average particle size lower than 0.2 mm. In this way, the specific surface area is maximized and the leaching reaction is improved. The ground material passes to the subsequent leaching in acid; the acid used is a diluted nitric acid solution, with a concentration of 0.6 N.

The ratio (weight/volume) between the solid and the acid liquid, used in the test, was 1/50; the reaction system was also maintained at 90°C and with atmospheric pressure.

At the end of the reaction time, the liquid was separated from the solid by mechanical decantation, by centrifuging; the clarified liquid was then filtered and analysed. The solid treated was recovered for any extraction of aluminium and silicon compounds, according to the methods described in the case of alternative A of the second concentrating step.

The following table shows the percentage of extraction of the rare metals and rare earth metals of interest, calculated from the elementary analysis of these elements in the 0.6 N nitric acid solution, at the end of the leaching reaction:

**Table 6** - Elementary analysis of the 0.6 N nitric acid solution, at the end of the leaching reaction

| Parameter | Unit of measurement | Extraction after single passage (1 hour) |
|---|---|---|
| Aluminium | % | 60.0 |
| Iron | % | 22.5 |
| Yttrium | % | 65.8 |
| Lanthanum | % | 18.7 |
| Scandium | % | 50.0 |

The liquid resulting from the acid leaching is sent, after filtration, to the next third concentrating step.

Third concentrating step, by separating compounds containing aluminium:

the liquid coming from the acid leaching, and which contains, in solution, rare metals and rare earth metals, as well as a not insignificant quantity of other elements, is treated on selective ion exchange resins, of cationic type.

The resins "capture" the rare metals and the rare earth metals present in the alkaline solution (such as, for example, scandium, yttrium and lanthanum), and block them on the active sites of the resin, thereby concentrating them. The concentration factor of the rare metals and rare earth metals on the resins depends on the ratio between the volume of leaching liquid treated and the volume of the bed of selective resins. A typical concentration ratio is approximately 100 times.

The concentration ratio on the resins in the test in question was 20 times. A volume of 2 litres of acid solution has been treated with a volume of 0.1 litres of selective resins.

Together with the cations of the metals and rare metals, other cations of any undesired elements present, such as aluminium and iron, are also captured, if present, in the test described.

The 0.6 N nitric acid solution, after the passage on resins, is sent to the second step, for re-use in the process, if necessary with the addition of new solution.

After having captured the rare metals and rare earth metals of interest, together with the undesired elements, the bed of selective resins, of the cationic type, is treated with a solution of nitric acid with a concentration of between 1.25 N and 1.75 N. A nitric acid solution with this concentration frees from the resin only the undesired elements, leaving the rare metals and rare earth metals on the bed.

The bed of selective resins is then washed with a nitric acid solution with a concentration of between 3 N and 10 N; in these conditions, the rare metals and rare earth metals which were linked to the resins are removed from the bed. In this way, an acid solution is generated containing a concentrate of a mixture of rare metals and rare earth metals. The concentration of the rare metals and rare earth metals in the resulting acid solution depends on the content (in grams) of each element in the filtering bed (degree of saturation of the filtering bed) and on the ratio between the volume of the bed of resins and the total volume of the 3 N to 6 N nitric acid solution used. In the example in question, for instance, the 0.1 litre filter bed, containing 1.8 mg of scandium, has been washed with a volume of 0.5 litres of 6 N nitric acid solution, obtaining a concentration of 3.6 mg/litre of scandium in solution.

The rare metals and rare earth metals present in the nitric acid solution obtained in this way can be separated selectively by means of one of the prior art techniques.

**Claims**

1. A process for the concentration of metals, rare metals and rare earth metals, occurring in the powdery by-products resulting from the treatment of bauxite, such as red mud, and transformation thereof into individual products to be used in the Bayer process and/or to be sent to respective reference markets thereof, comprising the following stages:

   ▪ First concentrating step, for the separation of occurring iron, which essentially involves the following operations:

   - Optional grinding and drying of the material to be treated material at a temperature from 60 to 250°C;
   - Optional roasting in order to eliminate also the crystallization water;
   - Optional grinding of the resulting product;
   - Mixing with a component, capable of modifying the basicity index of the mixture, called Fly Ash, that is a waste of other processes, so as to result in a basicity index with values ranging from 0.1 to 2.0;
   - Further mixing with carbon-containing reducing substances to supplement the reducing action of the fly ash;
   - Melting of the material in a first reactor, with the operating temperature of melting bath $\geq$ 1300°C;
   - Obtaining a product enriched in aluminium, titanium and other metals, rare metals and rare earth metals merging into the overlying slag from which the underlying molten metallic product is separated in the form of an iron alloy with minimum quality equal to pig iron;

   ▪ Second concentrating step, for separating the compounds containing aluminium and silicon, which may involve a basic (alkaline) leaching or an acid leaching and, in the case of alkaline leaching, essentially comprises the following operations:

   - Sending the molten slag, exiting from the reactor of the first concentrating step, into a second reactor where at a temperature of about 1000°C an alkali and/or alkaline earth metal carbonate is added to it and then it is cooled to temperature $\leq$ 500°C;
   - Alkaline leaching of the resulting product in order for the aluminium to be dissolved, in the form of hydrated salt of alkali and/or alkaline earth metal, and Si in the form of hydrated silica;
   - Treatment of the liquid obtained with milk of lime in order to separate the silica and then with $CO_2$ to precipitate $Al(OH)_3$ that is separated and calcined to give $Al_2O_3$;
   - Sending the residual liquid into the head of the basic leaching section;
   - Obtaining, at the end of the leaching operations, a solid having a higher concentration of the rare metal and rare earth metal content.

2. The process according to claim 1, wherein the second concentrating step, in order to separate the aluminium and silicon containing compounds, and involving an acid leaching, essentially comprises the following operations:

   - Cooling of the slag exiting from the reactor in the first concentrating step to a temperature below 100°C;
   - Fine grinding of the resulting product to maximize the specific surface area (average particle size lower than 0.2 mm);

- Acid leaching with aqueous solution of nitric acid ≥ 0.3 N, to extract rare metals and rare earth metals along with the titanium and other possibly occurring trace elements, with separation of the unsolubilized residue from the acid leaching and treatment for the extraction of Al and Si compounds.

3. The process according to claim 2, where there is provided for a
   ▪ Third concentrating step, which essentially comprises the following operations:

   - Filtration of the liquid resulting from the acid leaching;
   - Passage of the filtered liquid, which contains in solution rare, rare earth and undesirable metals, through selective ion exchange resins of cationic type, on the active sites of which the cations of the above metals are blocked;
   - Selective removal, from the resulting cation exchange resin, only of the undesired metals, such as iron, aluminium, calcium, titanium, sodium, with $HNO_3$ aqueous solution of between 1.25 N and 1.75 N;
   - Subsequent extraction of the rare metals and rare earth metals from the cation exchange resin, deprived of the undesired elements, with $HNO_3$ aqueous solution of between 3 N to 10 N, resulting in the regeneration of the cation resin and use thereof in a subsequent concentrating cycle;
   - Selective separation, by known techniques, from the resulting solution, of the individual extracted rare metals and rare earth metals.

4. The process according to any one of claims from 1 to 3, wherein the basicity index of the mixture is changed by Coal Fly Ash containing a significant carbon percentage and a resulting reducing activity.

5. The process according to any one of the preceding claims, wherein the first reactor for melting the material to be treated is selected from the group comprising reactors of the type EAF (Electric Arc Furnace), of the type plasma transferred arc, plasma not transferred arc, microwave plasma, Brown's gas reactor and electrolysis catalysed gas reactor.

6. The process according to any one of claims 2 to 5, wherein the acid leaching is performed with a ≥ 0.3 N, preferably 0.6 N, aqueous diluted nitric acid solution.

7. The process according to any one of claims 2 to 6, wherein the ratio (weight/volume) between the material to be treated and the acid solution is between 1/2 and 1/50.

8. The process according to any one of claims 2 to 7, wherein the temperature during the acid leaching is between 40°C and 95°C at atmospheric pressure.

9. The process according to any one of claims 2 to 8, wherein the duration of the acid leaching is between 15 minutes and 120 minutes.

10. The process according to any one of claims 2 to 9, wherein the acid leaching operation is repeated at least once.

11. The process according to any one of claims 2 to 10, wherein the unsolubilized residue is separated from the acid leaching liquid by the decantation or filtration technique.

12. The process according to any one of claims 2 to 11, wherein the selective removal, in the third concentrating step, only of the undesirable metals is obtained by passing through the cation exchange resin a nitric acid aqueous solution from 1.25 N to 1.75 N.

13. The process according to any one of claims 2 to 12, wherein the rare metals and rare earth metals are extracted, using a nitric acid aqueous solution of from 3 N to 10 N, from the cation exchange resin, already deprived of undesirable metals, which, being thus regenerated, is available for a subsequent resin concentration cycle.

14. The process according to any one of claims 2 to 13, wherein the solution enriched in rare metals and rare earth metals is subjected to known techniques for selective separation to obtain separately the individual components of the enriched solution.

15. The process according to claim 14, wherein the selective separation is performed with organic solvents.

**16.** The process according to any one of the preceding claims, wherein the organic solvent is DEHPA, di-(2-ethylhexil) phosphoric acid.

**17.** The process according to any one of the preceding claims, wherein the rare metals and rare earth metals to be concentrated are scandium, yttrium and lanthanum.

**Patentansprüche**

**1.** Verfahren zum Konzentrieren von Metallen, seltenen Metallen und Seltenerdmetallen, die in den pulverförmigen Nebenprodukten aus der Behandlung von Bauxit, wie z. B. Rotschlamm, resultieren, und deren Umwandlung in einzelne Produkte, die in dem Bayer-Verfahren zu verwenden und/oder an die jeweiligen Referenzmärkte zu senden sind, umfassend die folgenden Stufen:

> • einen ersten Konzentrationsschritt zur Abtrennung des anfallenden Eisens, der im Wesentlichen die folgenden Vorgänge involviert:
>
>> - Optionales Mahlen und Trocknen des zu behandelnden Materials bei einer Temperatur von 60 bis 250 °C;
>> - Optionales Rösten, um auch das Kristallisationswasser zu entfernen;
>> - Optionales Mahlen des resultierenden Produkts;
>> - Mischen mit einer Komponente, die in der Lage ist, den Basizitätsindex des Gemischs zu verändern, bezeichnet als Flugasche, die ein Abfall bei anderen Verfahren ist, um in einem Basizitätsindex mit Werten in einem Bereich von 0,1 bis 2,0 zu resultieren;
>> - weiteres Mischen mit kohlenstoffhaltigen reduzierenden Substanzen zum Ergänzen der reduzierenden Wirkung der Flugasche;
>> - Schmelzen des Materials in einem ersten Reaktor, mit der Betriebstemperatur des Schmelzbads ≥ 1300 °C;
>> - Erlangen eines mit Aluminium, Titan und anderen Metallen, seltenen Metallen und Seltenerdmetallen angereicherten Produkts, das in die darüberliegende Schlacke übergeht, aus der das darunterliegende geschmolzene metallische Produkt in Form einer Eisenlegierung mit einer dem Roheisen mindestens gleichwertigen Qualität abgeschieden wird;
>
> • einen zweiten Konzentrationsschritt zur Abtrennung der aluminium- und siliciumhaltigen Verbindungen, der ein basisches (alkalische) Auslaugen oder ein saures Auslaugen involvieren kann und im Fall eines alkalischen Auslaugens im Wesentlichen die folgenden Vorgänge umfasst:
>
>> - Senden der geschmolzenen Schlacke, die aus dem Reaktor des ersten Konzentrationsschritts austritt, in einen zweiten Reaktor, wo bei einer Temperatur von etwa 1000 °C ein Alkali und/oder Erdalkalicarbonat hinzugefügt und dann auf eine Temperatur von ≤ 500 °C abgekühlt wird;
>> - Alkalisches Auslaugen des resultierenden Produkts, um das Aluminium in Form von hydratisiertem Alkali- und/oder Erdalkalimetallsalz und das Si in Form von hydratisiertem Siliziumdioxid zu lösen;
>> - Behandeln der erlangten Flüssigkeit mit Kalkmilch, um das Siliziumdioxid abzutrennen, und dann mit $CO_2$, um $Al(OH)_3$ zu präzipitieren das abgetrennt und kalziniert wird, um $Al_2O_3$ zu ergeben;
>> - Senden der Restflüssigkeit in den Kopf des basischen Auslaugbereichs;
>> - Erlangen, am Ende des Auslaugvorgangs, eines Feststoffs, der eine höhere Konzentration des Gehalts an seltenen Metallen und Seltenerdmetallen aufweist.

**2.** Verfahren nach Anspruch 1, wobei der zweite Konzentrationsschritt zum Abtrennen der aluminium- und siliciumhaltigen Verbindungen und der ein saures Auslaugen involviert, im Wesentlichen die folgenden Vorgänge umfasst:

> - Abkühlen der in der ersten Konzentrationsstufe aus dem Reaktor austretenden Schlacke auf eine Temperatur unter 100 °C;
> - Feinvermahlen des resultierenden Produkts, um die spezifische Oberfläche zu maximieren (durchschnittliche Partikelgröße unter 0,2 mm);
> - Saures Auslaugen mit wässriger Salpetersäure ≥ 0,3 N, um seltene Metalle und Seltenerdmetalle zusammen mit dem Titan und anderen möglicherweise vorkommenden Spurenelementen zu extrahieren, mit Abtrennung des unlöslichen Rests aus dem sauren Auslaugen und Behandlung zur Extraktion von Al- und Si-Verbindungen.

**3.** Verfahren nach Anspruch 2, wobei Folgendes bereitgestellt ist

• ein dritter Konzentrationsschritt, der im Wesentlichen die folgenden Vorgänge umfasst:

- Filtration der Flüssigkeit, die aus dem sauren Auslaugen resultiert;
- Durchleiten der gefilterten Flüssigkeit, die in Lösung seltene Metalle, Seltenerdmetalle und unerwünschte Metalle enthält, durch selektive Ionenaustauscherharze kationischen Typs, an deren aktiven Stellen die Kationen der obigen Metalle blockiert werden;
- selektives Entfernen, aus dem resultierenden Kationenaustauscherharz, nur der unerwünschten Metalle, wie beispielsweise Eisen, Aluminium, Calcium, Titan, Natrium, mit wässriger $HNO_3$-Lösung von zwischen 1,25 N und 1,75 N;
- anschließendes Extrahieren der seltenen Metalle und Seltenerdmetalle aus dem Kationenaustauscherharz, das frei von den unerwünschten Elementen ist, mit einer wässrigen $HNO_3$-Lösung von zwischen 3 N bis 10 N, was in der Regenerierung des Kationenharzes und dessen Verwendung in einem anschließenden Konzentrationszyklus resultiert;
- selektives Abtrennen, durch bekannte Techniken, der einzelnen extrahierten seltenen Metalle und Seltenerdmetalle aus der resultierenden Lösung.

4. Verfahren nach einem der Ansprüche 1 bis 3, wobei der Basizitätsindex des Gemischs durch Kohleflugasche, die einen signifikanten Kohlenstoffprozentsatz enthält, und eine resultierende reduzierende Aktivität verändert wird.

5. Verfahren nach einem der vorherigen Ansprüche, wobei der erste Reaktor zum Schmelzen des zu behandelnden Materials ausgewählt ist aus der Gruppe, umfassend Reaktoren vom Typ EAF (Lichtbogenofen), vom Typ plasmaübertragener Lichtbogen, nicht plasmaübertragener Lichtbogen, Mikrowellenplasma, Brownscher Gasreaktor und elektrolysekatalysierter Gasreaktor.

6. Verfahren nach einem der Ansprüche 2 bis 5, wobei das saure Auslaugen mit einer wässrigen verdünnten Salpetersäurelösung ≥ 0,3 N, vorzugsweise 0,6 N, ausgeführt wird.

7. Verfahren nach einem der Ansprüche 2 bis 6, wobei das Verhältnis (Gewicht/Volumen) zwischen dem zu behandelnden Material und der Säurelösung zwischen 1/2 und 1/50 ist.

8. Verfahren nach einem der Ansprüche 2 bis 7, wobei die Temperatur während des sauren Auslaugens zwischen 40 °C und 95 °C bei atmosphärischem Druck ist.

9. Verfahren nach einem der Ansprüche 2 bis 8, wobei die Dauer des sauren Auslaugens zwischen 15 Minuten und 120 Minuten ist.

10. Verfahren nach einem der Ansprüche 2 bis 9, wobei das saure Auslaugen mindestens einmal wiederholt wird.

11. Verfahren nach einem der Ansprüche 2 bis 10, wobei der unlöslich gemachte Rest durch Dekantieren oder Filtrieren von der sauren Auslaugflüssigkeit getrennt wird.

12. Verfahren nach einem der Ansprüche 2 bis 11, wobei die selektive Entfernung, in dem dritten Konzentrationsschritt, nur der unerwünschten Metalle dadurch erreicht wird, dass eine wässrige Salpetersäurelösung von 1,25 N bis 1,75 N durch das Kationenaustauscherharz geleitet wird.

13. Verfahren nach einem der Ansprüche 2 bis 12, **dadurch gekennzeichnet, dass** die seltenen Metalle und die Seltenerdmetalle unter Verwendung einer wässrigen Salpetersäurelösung von 3 N bis 10 N aus dem bereits von unerwünschten Metallen befreiten Kationenaustauscherharz extrahiert werden, das auf diese Weise regeneriert wird und für einen anschließenden Harzkonzentrationszyklus verfügbar ist.

14. Verfahren nach einem der Ansprüche 2 bis 13, wobei die mit seltenen Metallen und Seltenerdmetallen angereicherte Lösung bekannten Techniken zur selektiven Trennung unterzogen wird, um separat die einzelnen Komponenten der angereicherten Lösung zu erlangen.

15. Verfahren nach Anspruch 14, wobei die selektive Trennung mit organischen Lösungsmitteln ausgeführt wird.

16. Verfahren nach einem der vorherigen Ansprüche, wobei das organische Lösungsmittel DEHPA, di-(2-Ethylhexil)-phosphorsäure, ist.

**17.** Verfahren nach einem der vorherigen Ansprüche, wobei die zu konzentrierenden seltenen Metalle und Seltenerdmetalle Scandium, Yttrium und Lanthan sind.

**Revendications**

**1.** Procédé de concentration de métaux, métaux rares et terres rares, se produisant dans les sous-produits pulvérulents résultant du traitement de bauxite, tels que de la boue rouge,
et de transformation de ceux-ci en produits individuels destinés à être utilisés dans le procédé Bayer et/ou à être envoyés sur des marchés de référence respectifs de ceux-ci, comprenant les étapes suivantes:

• Première étape de concentration, pour la séparation du fer se produisant, qui implique essentiellement les opérations suivantes:

- Broyage et séchage facultatifs du matériau à traiter à une température de 60 à 250 °C;
- Grillage facultatif afin d'éliminer également l'eau de cristallisation;
- Broyage facultatif du produit résultant;
- Mélange avec un composant, capable de modifier l'indice de basicité du mélange, appelé cendre volante, qui est un déchet d'autres procédés, de manière à résulter en un indice de basicité avec des valeurs allant de 0,1 à 2,0;
- Mélange supplémentaire avec des substances réductrices contenant du carbone pour compléter l'action réductrice de la cendre volante;
- Fusion du matériau dans un premier réacteur, avec la température de fonctionnement du bain de fusion $\geq 1300$ °C;
- Obtention d'un produit enrichi en aluminium, titane et autres métaux, métaux rares et terres rares se fondant dans le laitier sus-jacent dont le produit métallique fondu sous-jacent est séparé sous forme d'un alliage de fer de qualité minimale égale à de la fonte brute;

• Deuxième étape de concentration, pour séparer les composés contenant de l'aluminium et du silicium, qui peut faire intervenir une lixiviation basique (alcaline) ou une lixiviation acide et, dans le cas d'une lixiviation alcaline, comprend essentiellement les opérations suivantes:

- Envoi du laitier fondu, sortant du réacteur de la première étape de concentration, dans un deuxième réacteur où, à une température d'environ 1000 °C, un carbonate de métal alcalin et/ou alcalino-terreux lui est ajouté, puis il est refroidi à une température $\leq 500$ °C;
- Lixiviation alcaline du produit résultant afin de dissoudre l'aluminium, sous forme de sel hydraté de métal alcalin et/ou alcalino-terreux, et Si sous forme de silice hydratée;
- Traitement du liquide obtenu avec du lait de chaux afin de séparer la silice puis avec du $CO_2$ pour précipiter de l'$Al(OH)_3$ qui est séparé et calciné pour donner de l'$Al_2O_3$;
- Envoi du liquide résiduel dans la tête de la section de lixiviation basique;
- Obtention, à la fin des opérations de lixiviation, d'un solide présentant une concentration plus élevée en métal rare et en terre rare.

**2.** Procédé selon la revendication 1, dans lequel la deuxième étape de concentration, afin de séparer les composés contenant de l'aluminium et du silicium, et impliquant une lixiviation acide, comprend essentiellement les opérations suivantes:

- Refroidissement du laitier sortant du réacteur lors de la première étape de concentration à une température inférieure à 100 °C;
- Broyage fin du produit résultant pour maximiser la superficie spécifique (taille moyenne de particules inférieure à 0,2 mm);
- Lixiviation acide avec une solution aqueuse d'acide nitrique $\geq 0,3$ N, pour extraire des métaux rares et des terres rares ainsi que le titane et d'autres éléments en trace éventuellement présents, avec séparation du résidu non solubilisé de la lixiviation acide et traitement pour l'extraction de composés d'Al et de Si.

**3.** Procédé selon la revendication 2, dans lequel sont prévus

• Une troisième étape de concentration, qui comprend essentiellement les opérations suivantes:

- Filtration du liquide résultant de la lixiviation acide;
- Passage du liquide filtré, qui contient en solution des métaux rares, des terres rares et des métaux indésirables, à travers des résines échangeuses d'ions sélectives de type cationique, sur les sites actifs desquelles les cations des métaux ci-dessus sont bloqués;
- Retrait sélectif, de la résine échangeuse de cations résultante, uniquement des métaux indésirables, tels que du fer, de l'aluminium, du calcium, du titane, du sodium, avec une solution aqueuse de $HNO_3$ comprise entre 1,25 N et 1,75 N;
- Extraction ultérieure des métaux rares et des terres rares de la résine échangeuse de cations, dépourvue des éléments indésirables, avec de la solution aqueuse de $HNO_3$ comprise entre 3 N et 10 N, résultant en la régénération de la résine cationique et l'utilisation de celle-ci dans un cycle de concentration ultérieur;
- Séparation sélective, par des techniques connues, de la solution résultante, des métaux rares et terres rares extraits individuellement.

4. Procédé selon l'une quelconque des revendications 1 à 3, dans lequel l'indice de basicité du mélange est modifié par de la cendre volante de charbon contenant un pourcentage de carbone significatif et une activité réductrice résultante.

5. Procédé selon l'une quelconque des revendications précédentes, dans lequel le premier réacteur de fusion du matériau à traiter est sélectionné à partir du groupe comprenant des réacteurs de type EAF (Four à arc électrique), de type plasma à arc transféré, plasma à arc non transféré, plasma micro-ondes, réacteur à gaz de Brown et réacteur à gaz catalysé par électrolyse.

6. Procédé selon l'une quelconque des revendications 2 à 5, dans lequel la lixiviation acide est réalisée avec une solution aqueuse d'acide nitrique dilué $\geq$ 0,3 N, de préférence 0,6 N.

7. Procédé selon l'une quelconque des revendications 2 à 6, dans lequel le rapport (poids/volume) entre le matériau à traiter et la solution acide est compris entre 1/2 et 1/50.

8. Procédé selon l'une quelconque des revendications 2 à 7, dans lequel la température pendant la lixiviation acide est comprise entre 40 °C et 95 °C à pression atmosphérique.

9. Procédé selon l'une quelconque des revendications 2 à 8, dans lequel la durée de la lixiviation acide est comprise entre 15 minutes et 120 minutes.

10. Procédé selon l'une quelconque des revendications 2 à 9, dans lequel l'opération de lixiviation acide est répétée au moins une fois.

11. Procédé selon l'une quelconque des revendications 2 à 10, dans lequel le résidu non solubilisé est séparé du liquide de lixiviation acide par la technique de décantation ou de filtration.

12. Procédé selon l'une quelconque des revendications 2 à 11, dans lequel, dans la troisième étape de concentration, le retrait sélectif uniquement des métaux indésirables est obtenu en faisant passer à travers la résine échangeuse de cations une solution aqueuse d'acide nitrique de 1,25 N à 1,75 N.

13. Procédé selon l'une quelconque des revendications 2 à 12, dans lequel les métaux rares et les terres rares sont extraits, à l'aide d'une solution aqueuse d'acide nitrique de 3 N à 10 N, de la résine échangeuse de cations, déjà dépourvue de métaux indésirables, qui, étant ainsi régénérée, est disponible pour un cycle de concentration de résine ultérieur.

14. Procédé selon l'une quelconque des revendications 2 à 13, dans lequel la solution enrichie en métaux rares et terres rares est soumise à des techniques connues de séparation sélective pour obtenir séparément les composants individuels de la solution enrichie.

15. Procédé selon la revendication 14, dans lequel la séparation sélective est réalisée avec des solvants organiques.

16. Procédé selon l'une quelconque des revendications précédentes, dans lequel le solvant organique est le DEHPA, l'acide di-(2-éthylhexil) phosphorique.

**17.** Procédé selon l'une quelconque des revendications précédentes, dans lequel les métaux rares et les terres rares à concentrer sont le scandium, l'yttrium et le lanthane.

Optional thermal pre-treatment
between 60°C and 250°C, optional
roasting and optional grinding

FIRST CONCENTRATING STEP

Addition of a
reducing additive
containing carbon

Addition of a basicity
index correction
additive (Fly Ash)

Melting in reactor
at temperature
≥ 1300°C

Iron alloy with minimum
quality equal to pig iron

Enriched content of
aluminium, titanium,
metals, rare metals
and rare earth metals
in the slag

SECOND CONCENTRATING STEP

Alternative A Molten slag
with addition of carbonate
of an alkaline or alkaline
earth metal, at about.
1000°C

Alternative B Slag
cooled to temperature
less than 100°C

Recycling of basic
leaching liquid at
start of basic
leaching
treatment

Cooling at
temperature ≤ 500°C

Grinding to average
particle size
of less than 0.2 mm

Selective separation
of silica and
Al(OH)3 from the
basic leaching liquid

Acid leaching with
aqueous nitric acid
solution ≥ 0.3 N

Solid containing
a concentrate of
metals (optional
sending to second
concentrating step,
alternative A)

Basic leaching

Liquid containing
a concentrate
of rare metals and
rare earth metals
(send to third
concentrating step)

Solid containing a
concentrate of rare
and rare earth metals
(optional sending to
second concentrating
step, alternative B)

Calcination of
Al(OH)3 to give
Al2O3

Filtration of the liquid
coming from the acid
leaching, and
containing a concentrate
of rare and rare earth
metals

THIRD CONCENTRATING STEP

Recycling of acid
leaching liquid at
start of acid leaching
treatment

Passage of the filtered
liquid, coming from the
acid leaching, on
selective ion exchange
resins of cationic type

Selective removal only of undesired
metals,by washing of the selective
ion exchange resins of cationic type,
with 1.25 N to 1.75 N nitric acid

Selective removal only of the rare and
rare earth metals, by washing of
the selective ion exchange resins of
cationic type, with 3 N to 10 N nitric acid

Selective separation only of the rare and
rare earth metals from the solution of 3
N to 10 N nitric acid, using prior art techniques

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Furnace smelting and extractive metallurgy of red mud: recovery of TiO2, Al2O3 and pig iron. **ERCAG E et al.** Journal of Chemical Technology and Biotechnology. Wiley, 01 November 1997, vol. 70, 241-246

- **CHENNA RAO BORRA et al.** Smelting of Bauxite Residue (Red Mud) in View of Iron and Selective Rare Earths Recovery. *Journal of Sustainable Technology,* 01 March 2016, vol. 2 (1), ISSN 2199-3823, 28-37